# EUROPEAN PATENT APPLICATION

(11) **EP 4 164 286 A1**
(43) Date of publication of application: **12.04.2023**
(21) Application number: 21822531.6
(22) Date of filing: 04.06.2021
(51) Int. Cl.: H04W 28/02

(54) **DATA TRANSMISSION METHOD AND APPARATUS, TERMINAL AND NETWORK SIDE DEVICE**

(30) Priority: 09.06.2020 CN 202010526455
(71) Applicant: Vivo Mobile Communication Co., Ltd., Dongguan, Guangdong 523863 (CN)
(72) Inventor: WU, Yumin, Dongguan, Guangdong 523863 (CN)
(74) Representative: Raffay & Fleck
(86) International application number: PCT/CN2021/098295
(87) International publication number: WO 2021/249296

(57) **Abstract**

The present application discloses a data transmission method and apparatus, a terminal and a network side device, belonging to the field of communication technology. Said method comprises: a terminal receiving target information sent by a network side device, the target information being used for indicating one or more frequency ranges for the terminal to transmit target data; and the terminal transmitting the target data in the frequency ranges.

## Description

### CROSS-REFERENCE TO RELATED APPLICATIONS

This application claims priority to Chinese Patent Application No. 202010526455.2 filed in China on June 9, 2020, which is incorporated herein by reference in its entirety.

### TECHNICAL FIELD

This application belongs to the field of communication technologies, and in particular, relates to a data transmission method and apparatus, a terminal, and a network side device.

### BACKGROUND

In the prior art, for IDLE/INACTIVE UE (User Equipment) (idle/inactive user equipment), a network side can configure only one initial BWP (initial Bandwidth Part, initial bandwidth part) for one cell. In this case, for a cell with a relatively large bandwidth (such as 200 MHz), due to an initial BWP bandwidth limit (such as 20 MHz), when a network needs to support sending of small data (a data transmission amount of less than 10 Kbytes) of the IDLE/INACTIVE UE, a resource for sending the small data can be configured on a frequency resource of the initial BWP. This easily leads to frequency congestion on the initial BWP, and also causes bandwidth waste of a large-bandwidth cell.

### SUMMARY

Objectives of embodiments of this application are to provide a data transmission method and apparatus, a terminal, and a network side device, to resolve a problem that in the conventional technology, a resource for sending small data can be configured only on a frequency resource of an initial bandwidth part, which easily causes frequency congestion on the initial bandwidth part.

To resolve the foregoing technical problems, this application is implemented as follows:

According to a first aspect, a data transmission method is provided and is applied to a terminal. The method includes: receiving, by the terminal, target information sent by a network side device, where the target information is used to indicate one or more frequency ranges for transmitting target data by the terminal; and transmitting, by the terminal, the target data within the frequency range.

According to a second aspect, a data transmission apparatus is provided, including: a receiving module, configured to receive target information sent by a network side device, where the target information is used to indicate one or more frequency ranges for transmitting target data by a terminal; and a transmission module, configured to transmit the target data within the frequency range.

According to a third aspect, a data transmission method is provided and is applied to a network side device. The method includes: configuring, by the network side device, target information, where the target information is used to indicate one or more frequency ranges for transmitting target data by a terminal; and sending, by the network side device, the target information to the terminal.

According to a fourth aspect, a data transmission apparatus is provided, including: a configuration module, configured to configure target information, where the target information is used to indicate one or more frequency ranges for transmitting target data by a terminal; and a sending module, configured to send the target information to the terminal.

According to a fifth aspect, a terminal is provided. The terminal includes a processor, a memory, and a program or instructions stored in the memory and executable on the processor. When the program or instructions are executed by the processor, the steps of the method according to the first aspect are implemented.

According to a sixth aspect, a network side device is provided. The network side device includes a processor, a memory, and a program or instructions stored in the memory and executable on the processor. When the program or instructions are executed by the processor, the steps of the method according to the third aspect are implemented.

According to a seventh aspect, a readable storage medium is provided, storing a program or instruction, the program or instruction, the program or instruction, when executed by a processor, implementing steps of the method according to the first aspect, or implementing steps of the method according to the third aspect.

According to an eighth aspect, a chip is provided, including: a processor and a communication interface, where the communication interface is coupled to the processor, and the processor is configured to run a network side device program or instruction, to implement the method according to the first aspect, or implement the method according to the third aspect.

In embodiments of this application, after receiving the target information sent by the network side device, the terminal can transmit the target data based on one or more frequency ranges indicated by the target information, that is, can transmit the target data within a frequency range configured by the network side device. If the target data is small data, the small data can be transmitted within the frequency range configured by the network side device, without a need to transmit the small data at a frequency resource position of an initial bandwidth part, which also avoids congestion on the initial bandwidth part.

### BRIEF DESCRIPTION OF THE DRAWINGS

FIG. 1 is a schematic flowchart of a new 2-step random access procedure according to an embodiment of this application;
FIG. 2 is a block diagram of a wireless communication system to which an embodiment of this application is applicable;
FIG. 3 is a flowchart 1 of a data transmission method according to an embodiment of this application;
FIG. 4 is a flowchart 2 of a data transmission method according to an embodiment of this application;
FIG. 5 is a schematic diagram 1 of a structure of a data transmission apparatus according to an embodiment of this application;
FIG. 6 is a schematic diagram 2 of a structure of a data transmission apparatus according to an embodiment of this application;
FIG. 7 is a schematic diagram of a structure of a communication device according to an embodiment of this application;
FIG. 8 is a schematic diagram of a hardware structure of a terminal for implementing an embodiment of this application; and
FIG. 9 is a schematic diagram of a hardware structure of a network side device for implementing an embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person skilled in the art based on the embodiments of this application without creative efforts shall fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

First, related terms involved in this application are described.

### 1. SDT (Small Data Transmission, small data transmission)

When in an IDLE/INACTIVE state, UE can directly send data to a network side device by using the following methods based on a resource configured on a network side:
(1) message (Msg) 3 of a 4-step random access procedure of initial access;
(2) MsgA of a 2-step random access procedure of initial access; and
(3) dedicated uplink PUSCH (Physical Uplink Shared Channel, physical uplink shared channel) resource (such as pre-configured PUSCH (pre-configured PUSCH) or PUR (Preallocated Uplink Resource, preallocated uplink resource)) configured by the network side device.

Correspondingly, the network side device can directly send data to the UE in the following manners:
(1) Msg4 of a 4-step random access procedure of initial access;
(2) MsgB of a 2-step random access procedure of initial access; and
(3) downlink feedback resource corresponding to a dedicated uplink resource configured by a network.

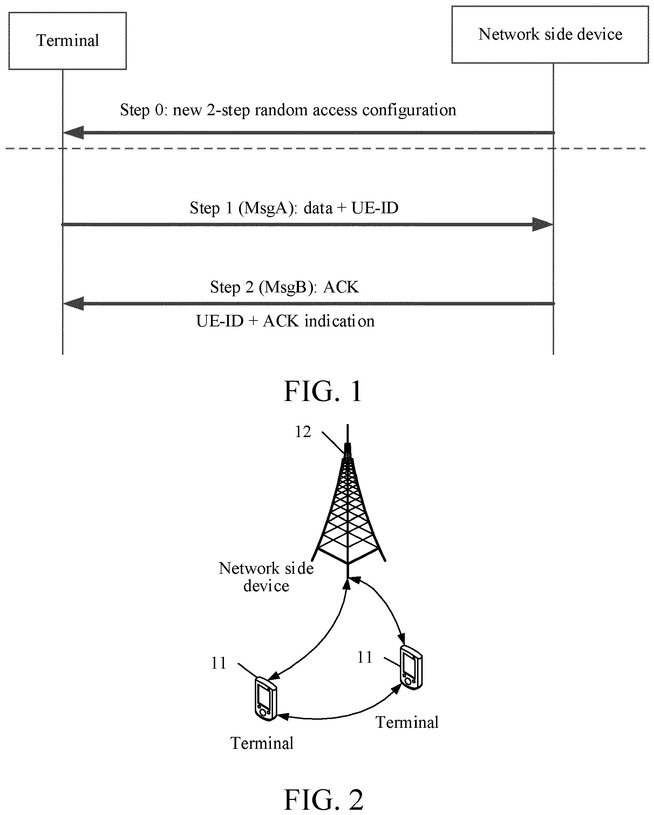

New 2-step random access (2-Step RACH) is shown in FIG. 1, and includes the following steps.

Step 0: The network side device configures configuration information of the new 2-step random access for the UE, where the configuration information includes sending resource information corresponding to a MsgA and a MsgB.

Step 1: The UE triggers a 2-step RACH procedure. The UE sends request information (MsgA), namely, data + UE-ID, to the network side device, for example, through a PUSCH (Physical Uplink Shared Channel, physical uplink shared channel). At the same time, the LTE may also send PRACH (Physical Random Access Channel, physical random access channel) information to the network side device.

Step 2: The network side device sends acknowledgment information (MsgB), namely, an ACK, to the LTE, to send a UE-ID + ACK indication to the LTE. If the LTE fails to receive the MsgB, the UE resends the MsgA.

Method steps of a conventional 4-step random access procedure (4-step RACH) include:
Step 1: The UE sends a Msg1 (random access request) to the network side device.
Step 2: After receiving the Msg1, the network side device sends a Msg2 (Random Access Response (RAR)) message to the UE, where the message carries uplink grant (uplink grant) information.
Step 3: The UE performs a MAC (Medium Access Control, medium access control) layer packet assembly function based on the uplink grant in the Msg2 to generate a MAC PDU (Protocol Data Unit, protocol data unit), and stores the MAC PDU in a Msg3 buffer. Then the UE sends the MAC PDU in the Msg3 buffer by using a HARQ process.
Step 4: After receiving a Msg3, the network side device sends a Msg4 (such as a contention resolution identity) to the UE.
Step 5: The LTE receives the Msg4, and determines whether contention is successfully resolved, and if the contention is successful, the random access procedure is successful; or otherwise, re-initiates the random access procedure.

For the re-initiated random access procedure, when the UE receives the uplink grant in the Msg2 again, the UE directly obtains the previously stored MAC PDU from the Msg3 buffer and sends it by using the HARQ (Hybrid Automatic Repeat reQuest, hybrid automatic repeat request) process. After the random access procedure is completed, the UE clears a HARQ buffer for Msg3 transmission of the random access procedure.

For LTE in a CONNECTED (connected state) state, Msg4 contention resolution verification of the UE is: uplink transmission scheduled by a PDCCH scrambled by a C-RNTI (Cell-Radio Network Temporary Identifier, cell radio network temporary identifier) is new transmission.

For LTE in an IDLE/INACTIVE state, Msg4 contention resolution verification of the LTE is: "LTE Contention Resolution Identity" information in a "LTE Contention Resolution Identity (contention resolution identity) MAC CE" received by the UE matches the first 48 bits of a "UL CCCH SDU" sent by the UE.

### 2. BWP (Bandwidth Part, bandwidth part)

For UE in a connected state, in a specific cell, a network side device may configure a maximum of four BWPs, which correspond to different operating frequency ranges. A network side may indicate an active BWP through DCI signaling. For a specific cell, UE may have only one active BWP at the same time.

For UE in an IDLE or INACTIVE state, in a specific cell, the network side device configures an initial BWP (namely, initial BWP) for the UE through a system message, and the UE initiates a random access procedure through the initial BWP and enters the connected state.

It is worth noting that the technologies described in embodiments of this application are not limited to a long term evolution (Long Term Evolution, LTE)/LTE-Advanced (LTE-Advanced, LTE-A) system, and are further applicable to another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are usually used interchangeably, and the described technology may be used not only in the systems and radio technologies mentioned above, but also in other systems and radio technologies. However, the following describes a new radio (New Radio, NR) system for example purposes, and uses NR terminology in most of the description below, although these technologies are also applicable to applications other than NR system applications, such as a 6th generation (6th Generation, 6G) communication system.

FIG. 2 is a block diagram of a wireless communication system to which an embodiment of this application is applicable. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or an in-vehicle device (VUE), or a pedestrian terminal (PUE). The wearable device includes a wristband, a headphone, glasses, and the like. It should be noted that a specific type of the terminal 11 is not limited in embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a WiFi node, a transmitting receiving point (Transmitting Receiving Point, TRP), or some other appropriate term in the art. The base station is not limited to a specific technical term, providing that a same technical effect is achieved. It should be noted that the base station in the NR system is merely used as an example in embodiments of this application, but the base station is not limited to a specific type.

A data transmission method provided in the embodiments of this application is described below through specific embodiments and application scenarios thereof with reference to the accompanying drawings.

Because the data transmission method in the embodiments of this application is related to interaction between a terminal and a network side device, an interaction process of the data transmission method in the embodiments of this application is described first. Steps of the data transmission method include:
Step S102: The network side device configures target information, where the target information is used to indicate one or more frequency ranges for transmitting target data by the terminal.
Step S 104: The network side device sends the target information to the terminal.
Step S 106: The terminal receives the target information sent by the network side device, where the target information is used to indicate the one or more frequency ranges for transmitting the target data by the terminal.
Step S 108: The terminal transmits the target data within the frequency range.

It can be seen from the foregoing steps S 102 to S108 that, after receiving the target information sent by the network side device, the terminal can transmit the target data based on one or more frequency ranges indicated by the target information, that is, can transmit the target data within a frequency range configured by the network side device. If the target data is small data, the small data can be transmitted within the frequency range configured by the network side device, without a need to transmit the small data at a frequency resource position of an initial bandwidth part, which also avoids congestion on the initial bandwidth part.

Certainly, the target data mentioned in embodiments of this application is not only small data, but may also be other conventional service data, or target control signaling, or the like.

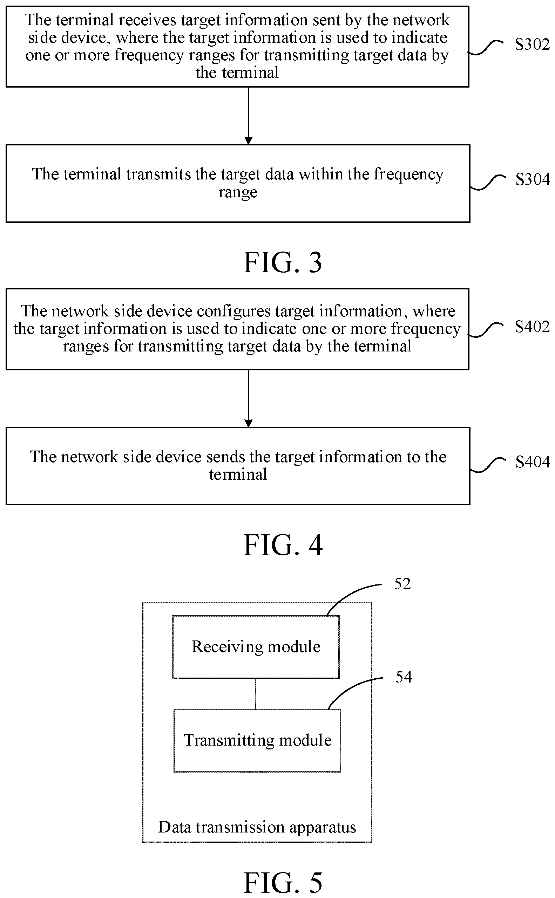

The following describes the data transmission method in embodiments of this application separately from the terminal side and the network side. Description is given first from the terminal side. Refer to FIG. 3. FIG. 3 is a flowchart 1 of a data transmission method according to an embodiment of this application. As shown in FIG. 3, steps of the method include:
Step S302: A terminal receives target information sent by a network side device, where the target information is used to indicate one or more frequency ranges for transmitting target data by the terminal.
Step S304: The terminal transmits the target data within the frequency range.

For the foregoing steps S302 to S304, small data is used as an example of the target data. After the terminal receives the target information, when the LTE has small data to send or when the UE has potential small data to send, for example, there is small data to be sent on DRB-1 (Data Radio Bearer-1, data radio bearer-1) at a specific time in the future, the UE selects BWP-1 (a frequency range configured by the network side device) of a cell 1 as an operating frequency range of the UE. When the UE has no small data to send, the UE selects an initial BWP of the cell 1 as the operating frequency range of the UE.

With reference to the foregoing 2-step RACH procedure, if the target data can be carried in the MsgA in the 2-step RACH procedure, in a process of performing the 2-step RACH procedure by the UE, the MsgB is sent on the BWP-1 (the frequency range configured by the network side device) of the cell 1, while the MsgB is received on the initial BWP (or BWP-2) of the cell 1. That is, the MsgA carrying small data is transmitted on a preconfigured frequency range (the BWP-1).

Optionally, the foregoing step S304 may further be: the terminal selects a frequency range from the one or more frequency ranges, and transmits the target data within the selected frequency range.

There are a plurality of manners in which the terminal in this embodiment of this application selects a frequency range from the one or more frequency ranges in this embodiment of this application, which are described below one by one.

Manner 1: In this manner, it needs to be first noted that corresponding frequency range selection information is configured for each of the frequency ranges, and the frequency range selection information includes any one of the following: a numerical value range, a data type, a service access type, and access control information. A correspondence between the frequency ranges and the frequency range selection information is determined in a manner configured by a network side or stipulated by a protocol.

Therefore, in Manner 1, a corresponding frequency range can be selected based on the frequency range selection information.
(1) When the frequency range selection information is a numerical value range, the terminal determines a first numerical value range, and selects, from the one or more frequency ranges, a frequency range corresponding to the first numerical value range. A specific application scenario may be: the network side device configures four BWPs for the cell 1, and corresponding weights of BWP-1/2/3/4 are [0,0.1], (0.1,0.3], (0.3,0.6], and (0.6,0.1], in this case, the UE selects a random number from [0, 1]. When the random number belongs to [0, 0.1], the UE selects BWP-1. When the random number belongs to (0.6, 1], the UE selects BWP-4.
(2) When the frequency range selection information is a data type, if a data type sent or received by the terminal is a first data type, a frequency range corresponding to the first data type is selected from the one or more frequency ranges. A specific application scenario may be: the network side device configures four BWPs for the cell 1, and a data type corresponding to BWP-1 is a data type whose logical channel priority is greater than or equal to 1 (or less than or equal to 4). Therefore, when the transmission logical channel priority is greater than or equal to 1, the corresponding BWP-1 is selected.
   The data type in this embodiment of this application includes at least one of the following: a data bearer type, a data bearer identifier, a data flow identifier, a data session identifier, a cell group identifier corresponding to data, a data capacity, and a priority of a logical channel corresponding to the data.
(3) When the frequency range selection information is a service access type, if a service access type sent or received by the terminal is a first service access type, a frequency range corresponding to the first service access type is selected from the one or more frequency ranges.

A specific application scenario may be: the network side device configures four BWPs for the cell 1, and an access category (Access Category, AC) and/or an access identity (Access Identity, AI) sent on BWP-1 are/is AC=1 and/or AI=1. Therefore, when the service access type including the Access Category and/or the access identity is AC=1 and/or AI=1, BWP-1 is selected.

The service access type in this embodiment of this application includes at least one of the following: an access category and an access identity.

(4) When the frequency range selection information is access control information, the following cases are included:
Case 1: If access control information corresponding to a first frequency range indicates that a terminal without a specified data type or without a specified service access type is allowed to select the first frequency range as an operating frequency of the terminal, the terminal is allowed to select the first frequency range when no data type or no service access type is specified.
Case 2: If the access control information corresponding to the first frequency range indicates that a terminal without a specified data type or without a specified service access type is not allowed to select the first frequency range as the operating frequency of the terminal, the terminal cannot select the first frequency range.
Case 3: If the access control information corresponding to the first frequency range indicates that a terminal with a specified data type or with a specified service access type is allowed to select the first frequency range as the operating frequency of the terminal, a terminal with a specified data type or with a specified service access type is allowed to select the first frequency range when no data type or no service access type is specified.
Case 4: If the access control information corresponding to the first frequency range indicates that a terminal with a specified data type or with a specified service access type is not allowed to select the first frequency range as the operating frequency of the terminal, a terminal with a specified data type or with a specified service access type cannot select the first frequency range.

Manner 2: Step S304 in this embodiment of this application may further include the following steps:
Step S304-11: The terminal calculates, by using a preset calculation rule, a numerical value corresponding to a first identifier, where the first identifier is an identifier of the terminal, and the calculation rule is dividing the numerical value by a quantity of the frequency ranges.
Step S304-12: The terminal determines a second identifier of a frequency range corresponding to a calculation result, where the calculation result is a remainder obtained by dividing the numerical value by the quantity of the frequency ranges.
Step S304-13: The terminal selects, from the one or more frequency ranges, a frequency range corresponding to the second identifier.

A specific application scenario of the foregoing steps S304-11 to S304-13 may be: the network side device configures four BWPs for the cell 1, and an identifier of the UE is UE_ID_1 (the first identifier); in this case, a BWP identifier (the second identifier) selected by the UE is a remainder obtained by dividing UE_ID_1 by 4, that is, BWP_ID = UE_ID mod Number_of_BWP.

Manner 3: Step S304 in this embodiment of this application may include the following steps:
Step S304-21: The terminal determines a measured value of a first parameter in the one or more frequency ranges, and when the measured value of the first parameter is greater than or equal to a threshold, the terminal selects, from the one or more frequency ranges, a frequency range corresponding to the first parameter.
Step S304-22: The terminal determines a measured value of a second parameter in the one or more frequency ranges, and when the measured value of the first parameter is less than or equal to the threshold, the terminal selects, from the one or more frequency ranges, a frequency range corresponding to the second parameter. The first parameter and the second parameter are different parameters.

A specific application scenario of the foregoing step S304-21 may be: the network side device configures four BWPs for the cell 1, and a measurement result of RSRP (Reference Signal Received Power, reference signal received power) or RSRQ (Reference Signal Received Quality, reference signal received quality) of BWP-1 is greater than or equal to a threshold configured by a network or stipulated by a protocol. The RSRP and the RSRQ are optional parameters of the first parameter in this embodiment of this application, and certainly, other parameters also fall within the protection scope of this application.

A specific application scenario of the foregoing step S304-22 may be: the network side device configures four BWPs for the cell 1, and a measurement result of RSSI (Received Signal Strength Indicator, received signal strength indicator) or CR (Channel Occupancy Rate, channel occupancy rate) of BWP-1 is greater than or equal to a threshold configured by a network or stipulated by a protocol (that is, a target frequency range is not congested). The RSSI and the CR are optional parameters of the second parameter in this embodiment of this application, and certainly, other parameters also fall within the protection scope of this application.

Optionally, the steps of the method in this embodiment of this application may further include:
Step S306: After the terminal transmits the target data in the frequency range, the terminal changes a current frequency range. Specifically, the UE may change the operating frequency range back to the initial BWP.

Optionally, the steps of the method in this embodiment of this application may further include:
Step S308: The terminal determines, in a manner configured by a network side or stipulated by a protocol, a frequency priority corresponding to each frequency range.
Step S310: The terminal determines a priority of cell selection or reselection based on the frequency priority corresponding to each frequency range, where different cells have different frequency ranges.

For the foregoing steps S308 and S310, when a cell in which the terminal is currently located is the cell 1, a cell 2 also has one or more frequency ranges configured by the network side device, and a priority of the frequency range in the cell 2 is higher than a priority of the frequency range of the cell 1, the terminal can reselect the cell 2 based on the priorities of the frequency ranges. After the cell 2 is reselected, the frequency range may not be selected based on the priority, and may be selected based on a type of the target data.

The following describes in detail the data transmission method on the terminal side in this application with reference to specific implementations of embodiments of this application.

The specific implementations provide a data transmission method. Steps of the method include: Based on target information sent by a network side device and a frequency range selection rule configured by a network or stipulated by a protocol, UE selects a frequency range configured by the network as an operating frequency range of the UE.

The frequency range selection rule configured by the network or stipulated by the protocol includes any one of the following:
(1) When the UE needs to send or receive specific service data, the UE selects a frequency range supporting the specific data (corresponding to the foregoing target data) as the operating frequency range of the UE.

In a specific application scenario, when the UE has small data to send (or when the UE has potential small data to send and small data may be sent at a specific time in the future), the UE selects BWP-1 (a frequency range supporting small data) of a cell 1 as the operating frequency range of the UE. When the UE has no small data to send, the UE selects an initial BWP of the cell 1 as the operating frequency range of the UE.

(2) When the LTE needs to send or receive specific information of a process of sending specific service data, the UE selects a frequency range supporting the specific service data as the operating frequency range of the UE.

In a specific application scenario, the UE performs a 2-step RACH procedure based on network configuration, where a MsgA is sent on the BWP-1 of the cell 1, and a MsgB is received on the initial BWP (or BWP-2) of the cell 1.

(3) If it is stipulated by the network or the protocol that UE without a specific data type or without a specific service access type is allowed to select the frequency range as the operating frequency range of the UE, the UE may select the frequency range as the operating frequency range of the UE when there is no specific data type or no specific service access type. Otherwise, the frequency range cannot be selected as the operating frequency range of the UE.

Optionally, the frequency range selection rule configured by the network or stipulated by the protocol and related to (1) and (2) may further include any one of the following:
1. A frequency range is randomly selected from a plurality of frequency ranges. For example, the network side device configures four BWPs for the cell 1, and the UE randomly selects a BWP.
2. A frequency range is selected from the plurality of frequency ranges based on an identifier of the UE.

For example, the network side device configures four BWPs for the cell 1, and the identifier of the UE is UE_ID_1; in this case, a BWP identifier selected by the UE is a remainder obtained by dividing UE_ID_1 by 4, that is, BWP_ID = UE_ID mod Number_of_BWP.

3. A corresponding frequency range is selected based on a configured numerical value range.

For example, a network side configures four BWPs for the cell 1, and corresponding weights of BWP-1/2/3/4 are [0,0.1], (0.1,0.3], (0.3,0.6], and (0.6,0.1]; in this case, the LTE selects a random number from [0, 1]. When the random number belongs to [0, 0.1], the UE selects BWP-1. When the random number belongs to (0.6, 1], the UE selects BWP-4.

4. A frequency priority corresponding to the frequency range is used as a frequency priority for cell reselection.

For example, the network side configures four BWPs for the cell 1, and a frequency priority corresponding to BWP-1 is 1, the LTE uses the frequency priority corresponding to BWP-1 as a frequency priority for selecting the cell 1.

5. If a data type sent or received by the UE is a first data type, the UE preferentially selects a frequency range corresponding to the first data type.

6. If a service access type sent or received by the UE is a first service access type, the UE preferentially selects a frequency range corresponding to the first service access type.

7. If it is configured by the network or stipulated by the protocol that LTE with a specific "data type" or with a specific "service access type" is allowed to select the frequency range as the operating frequency range of the LTE, the LTE with a specific "data type" or with a specific "service access type" may select the frequency range as the operating frequency range of the UE when there is a specific data type or a specific service access type. Otherwise, the frequency range cannot be selected as the operating frequency range of the UE.

8. A measured value of a parameter in a target frequency range is greater than or equal to a threshold.

For example, the network side device configures four BWPs for the cell 1, and a measurement result of RSRP (Reference Signal Received Power, reference signal received power) or RSRQ (Reference Signal Received Quality, reference signal received quality) of BWP-1 is greater than or equal to a threshold configured by a network or stipulated by a protocol.

9. The measured value of the parameter in the target frequency range is less than or equal to the threshold.

For example, the network side device configures four BWPs for the cell 1, and a measurement result of RSSI (Received Signal Strength Indicator, received signal strength indicator) or CR (Channel Occupancy Rate, channel occupancy rate) of BWP-1 is greater than or equal to a threshold configured by a network or stipulated by a protocol.

Optionally, after the LTE completes sending or receiving of specific data, or completes sending and receiving of information and/or data of a process related to sending of specific data, or indication information is received from the network side (for example, an RRC release message is received), the LTE changes the operating frequency range to a frequency range configured by the network side or stipulated by the protocol (for example, back to the initial BWP).

Optionally, when the UE changes the operating frequency range of the UE, the UE sends indication information to the network side, for example, initiates a random access procedure, or sends a MAC CE or RRC message.

It should be noted that the completion of the sending or receiving of specific data in this specific implementation means any one of the following:
(1) Specific data is successfully sent or received. For example, for data sending, feedback information is received from the network side; for data receiving, receiving feedback information is successfully sent.
(2) Specific data is sent or received for the first time.

It can be seen that through the specific implementations of this application, according to the method in the present invention, the network side device configures specific frequency ranges for sending and receiving of specific data of the UE, and the UE is allowed according to a specific rule to change the operating frequency range of the UE to a specific frequency range when sending and receiving specific data, thereby avoiding frequency congestion.

The data transmission method in the embodiment of this application is described above from the terminal side. The following describes a data transmission method in an embodiment of this application from the network side.

Refer to FIG. 4. FIG. 4 is a flowchart 2 of a data transmission method according to an embodiment of this application. As shown in FIG. 4, steps of the method include:
Step S402: A network side device configures target information, where the target information is used to indicate one or more frequency ranges for transmitting target data by a terminal.
Step S404: The network side device sends the target information to the terminal.

Optionally, the target information in this embodiment of this application includes at least one of the following: a frequency range identifier (for example, BWP-1), frequency channel number information (for example, ARFCN-1 (Absolute Radio Frequency Channel Number, absolute radio frequency channel number)) of a frequency range, bandwidth information (for example, 20 MHz) of a frequency range, a frequency start position (for example, ARFCN-start) of a frequency range, a frequency end position of a frequency range (for example, ARFCN-end), physical resource block identifier (for example, PRB-1 (Physical Resource Block, physical resource block)) of a frequency range, a physical resource block quantity identifier (for example, 10 PRBs) of a frequency range, and frequency offset information (for example, relative to central frequency information (or lowest frequency information or highest frequency information) of the initial BWP) of a frequency range.

Optionally, in this embodiment of this application, a manner in which the network side device sends the target information to the terminal in the foregoing step S404 may further be: the network side device indicates the target information to the terminal through at least one of system information, a radio resource control RRC message, or DCI (Downlink Control Information, downlink control information).

Optionally, the target information in this embodiment of this application further includes frequency range selection information. The frequency range selection information includes at least one of the following: a numerical value range, a data type, a service access type, and access control information.

Optionally, the data type in this embodiment of this application includes at least one of the following: a data bearer type, a data bearer identifier, a data flow identifier, a data session identifier, a cell group identifier corresponding to data, a data capacity, and a priority of a logical channel corresponding to the data.

Optionally, the service access type in this embodiment of this application includes at least one of the following: an access category and an access identity.

The following describes in detail the data transmission method in this embodiment of this application with reference to specific implementations of this application.

An embodiment of this application provides a data transmission method. Steps of the method include:
A network side device configures, for UE, one or more pieces of frequency range configuration information for sending specific data (or information of a process related to sending of specific data).

For example, for a cell 1, a frequency range for sending a small data service, which has a data transmission amount of less than 10 Kbytes (specific data), is BWP-1.

For the cell 1, sending and receiving frequency resources for random access procedure information (for example, a MsgA and/or a MsgB in 2-step RACH; or a Msg1 and/or a Msg2 and/or a Msg3 and/or a Msg4 in 4-step RACH) or corresponding messages and/or data of a dedicated resource (a LTE-specific uplink transmission resource and/or a UE-specific downlink transmission resource) of a small data service are BWP-1.

The frequency range information in this embodiment of this application includes at least one of the following:
(1) a frequency range identifier, for example, BWP-1;
(2) a frequency channel number, for example, ARFCN-1 (Absolute Radio Frequency Channel Number, absolute radio frequency channel number);
(3) a bandwidth, where the bandwidth is, for example, 20 MHz;
(4) a frequency start position, for example, ARFCN-start;
(5) a frequency end position, for example, ARFCN-end;
6) a physical resource block identifier, for example, PRB-1 (Physical Resource Block, physical resource block);
(7) an identifier of a physical resource block quantity, which is, for example, 10 PRBs; and
(8) a frequency offset information, for example, frequency offset value information relative to central frequency information (or lowest frequency information or highest frequency information) of an initial BWP. The frequency information and/or the frequency offset value information may be a frequency channel number or a physical resource block identifier.

Configuration information of a frequency range for sending the "specific service data (or information and/or data of a process related to sending of the specific service data)" may be sent to the LTE by using any one of the following methods:
(1) The configuration information is sent by using system information, for example, sent in a SIB 1.
(2) The configuration information is sent through a dedicated RRC message, for example, sent through an RRC release message, which is used by LTE in an IDLE or INACTIVE state to send or receive specific service data.
(3) The configuration information is indicated through DCI, for example, DCI of a T-C-RNTI is used to indicate a BWP for sending retransmission data of a Msg3. Alternatively, DCI of an RNTI reserved for the LTE is used to indicate a BWP of a "UE-specific uplink transmission resource" and/or a "UE-specific downlink transmission resource" of a process of receiving and sending dedicated resource data.

The "process related to sending of the specific service data" includes at least one of the following:
(1) a MsgA and/or a MsgB and/or a feedback resource of the MsgB in a 2-step RACH procedure;
(2) a Msg1 and/or a Msg2 and/or a Msg3 and/or a Msg4 and/or a feedback resource of the Msg4 in a 4-step RACH procedure; and
(3) "LTE-specific uplink transmission resource" and/or "LTE-specific downlink transmission resource" of a process of receiving and sending dedicated resource data.

It should be noted that, as configured by a network side or stipulated by a protocol, a frequency range corresponding to the target information may be the same as or different from a frequency range corresponding to the specific data (or information and/or data of a process related to sending of the specific service data).

For example, the network side device configures a frequency range corresponding to small data sending configuration related information, and it is stipulated by the protocol that the frequency range corresponding to the small data service is the same as the frequency range corresponding to the data sending configuration related information. Alternatively, the network side device configures the frequency range corresponding to the small data service and also configures the frequency range corresponding to the small data sending configuration related information, and in this case, these two frequency ranges may be different.

The steps of the method in this embodiment of this application include:

The network side device configures or the protocol stipulates the frequency range selection information. The frequency range selection information includes any one of the following:
(1) a numerical value range corresponding to a frequency range (for example, if the network side configures four BWPs for the cell 1, and a random number range corresponding to BWP-1 is [0, 0.1], when a random number of the UE belongs to [0, 0.1], the UE selects BWP-1);
(2) a frequency priority corresponding to a frequency range (for example, the network side configures four BWPs for the cell 1, a frequency priority corresponding to BWP-1 is 1);
(3) a data type corresponding to a frequency range (for example, the network side configures four BWPs for the cell 1, and a data type sent on BWP-1 is data whose logical channel priority is greater than or equal to 1 (or less than or equal to 4));
(4) a service access type corresponding to a frequency range (for example, the network side configures four BWPs for the cell 1, and an access category (Access Category and/or Access Identity) sent on BWP-1 is AC=1 and/or AI=1); and
(5) access control information corresponding to a frequency range (for example, reserved for UE that sends small data).

The data type in this embodiment of this application includes at least one of the following: a bearer type (such as a DRB or an SRB), a bearer identifier (such as DRB-1), data flow identifier (such as QoS flow-1), a session identifier (such as PDU session-1), a cell group identifier (such as an MCG (Master Cell Group)) or an SCG (Secondary Cell Group) corresponding to data), a data size limit (such as data equal to or greater than or less than 10 Kbytes), and a logical channel priority limit (such as data of a logical channel whose priority is equal to or greater than or less than a logical channel priority 3).

The service access type in this embodiment of this application includes at least one of the following: an access category (for example, Access category = 1) and an access identity (for example, Access Identity = 1).

The access control information in this embodiment of this application includes at least one of the following:
(1) whether UE with a specific "data type" or with a specific "service access type" is allowed to select the frequency range as an operating frequency range of the LTE (for example, camping); and
(2) whether UE without a specific "data type" or without a specific "service access type" is allowed to select the frequency range as the operating frequency range of the UE (for example, camping).

It can be seen that through this embodiment of this application, the network side device can configure a corresponding frequency range for transmission of target data of the UE, and the UE is allowed to change the operating frequency range of the UE to the corresponding frequency range during transmission of the target data, thereby avoiding frequency congestion.

It should be noted that the data transmission method provided in this embodiment of this application may be performed by a data transmission apparatus, or by a control module, for performing the data transmission method, in the data transmission apparatus. In an embodiment of this application, a data transmission apparatus provided in this embodiment of this application is described by using an example in which the data transmission method is performed by the data transmission apparatus.

The following describes the data transmission apparatus in this embodiment of this application. Refer to FIG. 5. FIG. 5 is a schematic diagram of a structure of a data transmission apparatus according to an embodiment of this application. As shown in FIG. 5, the apparatus is applied to a terminal side, and the apparatus includes:
a receiving module 52, configured to receive target information sent by a network side device, where the target information is used to indicate one or more frequency ranges for transmitting target data by a terminal; and
a transmission module 54, configured to transmit the target data within the frequency range.

Optionally, the transmission module in this embodiment of this application may further include: a selection unit, configured to select a frequency range from the one or more frequency ranges; and a transmission unit, configured to transmit the target data within the selected frequency range.

Optionally, corresponding frequency range selection information is configured for each of the frequency ranges, and the frequency range selection information includes any one of the following: a numerical value range, a data type, a service access type, and access control information. A correspondence between the frequency ranges and the frequency range selection information is determined in a manner configured by a network side or stipulated by a protocol.

Based on the frequency range selection information, the selection unit in this embodiment of this application includes: a first selection subunit, configured to determine a first numerical value range, and select, from the one or more frequency ranges, a frequency range corresponding to the first numerical value range; a second selection subunit, configured to: if a data type sent or received by the terminal is a first data type, select, from the one or more frequency ranges, a frequency range corresponding to the first data type; and a third selection subunit, configured to: if a service access type sent or received by the terminal is a first service access type, select, from the one or more frequency ranges, a frequency range corresponding to the first service access type.

Optionally, the selection unit in this embodiment of this application is further configured to perform one of the following manners:
(1) if access control information corresponding to a first frequency range indicates that a terminal without a specified data type or without a specified service access type is allowed to select the first frequency range as an operating frequency of the terminal, allowing selection of the first frequency range when no data type or no service access type is specified;
(2) if the access control information corresponding to the first frequency range indicates that a terminal without a specified data type or without a specified service access type is not allowed to select the first frequency range as the operating frequency of the terminal, disallowing selection of the first frequency range;
(3) if the access control information corresponding to the first frequency range indicates that a terminal with a specified data type or with a specified service access type is allowed to select the first frequency range as the operating frequency of the terminal, allowing a terminal with a specified data type or with a specified service access type to select the first frequency range when no data type or no service access type is specified; and
(4) if the access control information corresponding to the first frequency range indicates that a terminal with a specified data type or with a specified service access type is not allowed to select the first frequency range as the operating frequency of the terminal, disallowing a terminal with a specified data type or with a specified service access type to select the first frequency range.

Optionally, the selection unit in this embodiment of this application may further include: a calculation subunit, configured to calculate, by using a preset calculation rule, a numerical value corresponding to a first identifier, where the first identifier is an identifier of the terminal, and the calculation rule is dividing the numerical value by a quantity of the frequency ranges; a determining subunit, configured to determine a second identifier of a frequency range corresponding to a calculation result, where the calculation result is a remainder obtained by dividing the numerical value by the quantity of the frequency ranges; and a fourth selection subunit, configured to select, from the one or more frequency ranges, a frequency range corresponding to the second identifier.

Optionally, the selection subunit in this embodiment of this application may further include: a fifth selection subunit, configured to: determine a measured value of a first parameter in the one or more frequency ranges, and when the measured value of the first parameter is greater than or equal to a threshold, select, from the one or more frequency ranges, a frequency range corresponding to the first parameter; and a sixth selection subunit, configured to: determine a measured value of a second parameter in the one or more frequency ranges, and when the measured value of the first parameter is less than or equal to the threshold, select, from the one or more frequency ranges, a frequency range corresponding to the second parameter, where the first parameter and the second parameter are different parameters.

Optionally, the data type in this embodiment of this application includes at least one of the following: a data bearer type, a data bearer identifier, a data flow identifier, a data session identifier, a cell group identifier corresponding to data, a data capacity, and a priority of a logical channel corresponding to the data.

Optionally, the service access type in this embodiment of this application includes at least one of the following: an access category and an access identity.

Optionally, in addition to including the modules shown in FIG. 5, the apparatus in this embodiment of this application may further include a change module, configured to: after the terminal transmits the target data in the frequency range, change a current frequency range.

Optionally, in addition to including the modules shown in FIG. 5, the apparatus in this embodiment of this application may further include: a first determining module, configured to determine, in a manner configured by a network side or stipulated by a protocol, a frequency priority corresponding to each frequency range; and a second determining module, configured to determine a priority of cell selection or reselection based on the frequency priority corresponding to each frequency range, where different cells have different frequency ranges.

It can be seen that, after receiving the target information sent by the network side device, the apparatus in this embodiment of this application can transmit the target data based on one or more frequency ranges indicated by the target information, that is, can transmit the target data within a frequency range configured by the network side device. If the target data is small data, the small data can be transmitted within the frequency range configured by the network side device, without a need to transmit the small data at a frequency resource position of an initial bandwidth part, which also avoids congestion on the initial bandwidth part.

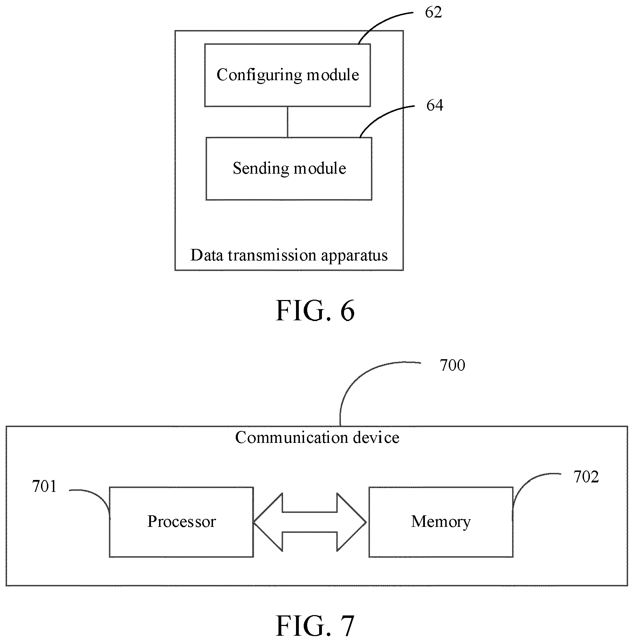

Refer to FIG. 6. FIG. 6 is a schematic diagram 2 of a structure of a data transmission apparatus according to an embodiment of this application. As shown in FIG. 6, the apparatus is applied to a network side, and the apparatus may include:
a configuration module 62, configured to configure target information, where the target information is used to indicate one or more frequency ranges for transmitting target data by a terminal; and
a sending module 64, configured to send the target information to the terminal.

Optionally, the target information in this embodiment of this application includes at least one of the following: an identifier of the frequency range, frequency channel number information of the frequency range, bandwidth information of the frequency range, frequency start position of the frequency range, frequency end position of the frequency range, an identifier of a physical resource block of the frequency range, an identifier of a physical resource block quantity of the frequency range, and frequency offset information of the frequency range.

Optionally, in addition to including the modules shown in FIG. 6, the apparatus in this embodiment of this application may further include: the sending module, further configured to indicate the target information to the terminal through at least one of system information, a radio resource control RRC message, or downlink control information DCI.

Optionally, the target information in this embodiment of this application further includes frequency range selection information. The frequency range selection information includes at least one of the following: a numerical value range, a data type, a service access type, and access control information.

It can be seen that through this embodiment of this application, the network side device can configure a corresponding frequency range for transmission of target data of the UE, and the UE is allowed to change the operating frequency range of the UE to the corresponding frequency range during transmission of the target data, thereby avoiding frequency congestion.

It should be noted that the data transmission apparatus in FIG. 5 in this embodiment of this application may be an apparatus, or may be a component, an integrated circuit, or a chip in a terminal. The apparatus may be a mobile terminal or a non-mobile terminal. For example, the mobile terminal may include but is not limited to types of the terminal 11 listed above, and the non-mobile terminal may be a server, a network attached storage (Network Attached Storage, NAS), a personal computer (personal computer, PC), a television (television, TV), a teller machine, or a self-service machine, or the like, which is not specifically limited in this embodiment of this application.

The data transmission apparatus in this embodiment of this application may be an apparatus having an operating system. The operating system may be an Android (Android) operating system, an iOS operating system, or another possible operating system, which is not specifically limited in the embodiments of this application.

The data transmission apparatus shown in FIG. 5 and provided in this embodiment of this application can implement processes implemented in the method embodiment shown in FIG. 3, and achieve a same technical effect. To avoid repetition, details are not described herein again.

Optionally, as shown in FIG. 7, an embodiment of this application further provides a communication device 700, including a processor 701, a memory 702, and a program or instructions stored in the memory 702 and executable on the processor 701. For example, when the communication device is a terminal, and the program or instructions are executed by the processor 701, processes of the foregoing data transmission method embodiment are implemented, and a same technical effect can be achieved. When the network side device 700 is a network side device, and the program or instructions are executed by the processor 701, processes of the data transmission method embodiment are implemented, and a same technical effect can be achieved. To avoid repetition, details are not described herein again.

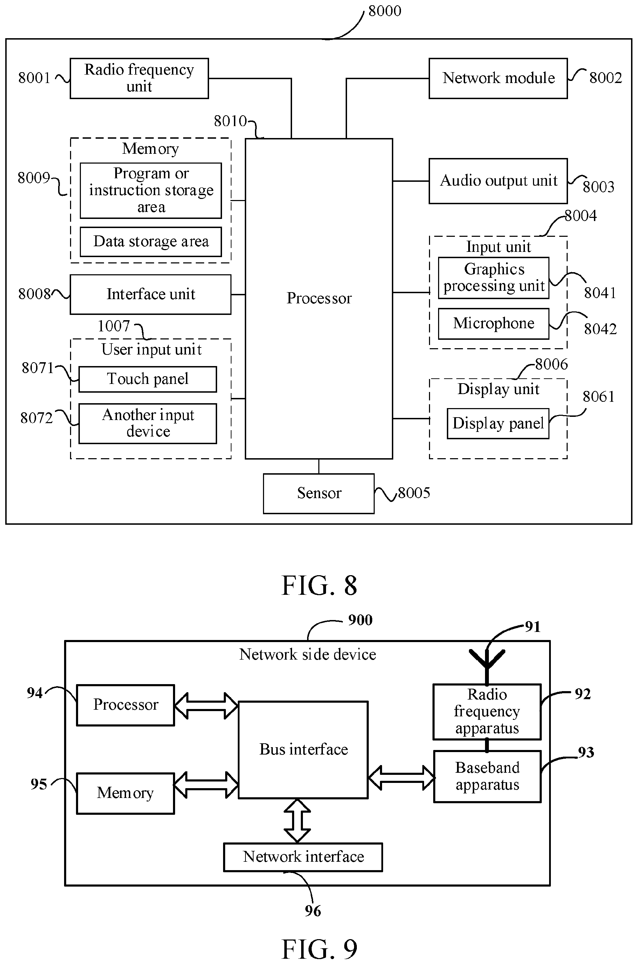

FIG. 8 is a schematic diagram of a hardware structure of a terminal for implementing an embodiment of this application.

The terminal 8000 includes but is not limited to components such as a radio frequency unit 8001, a network module 8002, an audio output unit 8003, an input unit 8004, a sensor 8005, a display unit 8006, a user input unit 8007, an interface unit 8008, a memory 8009, and a processor 8010.

A person skilled in the art may understand that the terminal 8000 further comprises a power supply (such as a battery) for supplying power to the components. The power supply may logically connect to the processor 8010 by using a power supply management system, thereby implementing functions, such as charging, discharging, and power consumption management, by using the power supply management system. A terminal structure shown in FIG. 8 does not constitute a limitation to the terminal, and the terminal may include more or fewer components than those shown in in FIG. 8, or some components may be combined, or a different component deployment may be used. Details are not described herein again.

It should be understood that, in this embodiment of this application, the input unit 8004 may include a graphics processing unit (Graphics Processing Unit, GPU) 8041 and a microphone 8042. The graphics processing unit 8041 processes image data of a static picture or a video obtained by an image capture apparatus (for example, a camera) in a video capture mode or image capture mode. The display unit 8006 may include a display panel 8061, and the display panel 8061 may be configured in a form of a liquid crystal display, an organic light-emitting diode, or the like. The user input unit 8007 includes a touch panel 8071 and another input device 8072. The touch panel 8071 is also referred to as a touchscreen. The touch panel 8071 may include two parts: a touch detection apparatus and a touch controller. Specifically, the another input device 8072 may include but is not limited to a physical keyboard, a function button (such as a volume control button or a power on/off button), a trackball, a mouse, a joystick, and the like. Details are not described herein.

In this embodiment of this application, after receiving downlink data from a network side device, the radio frequency unit 8001 sends the downlink data to the processor 8010 for processing, and in addition, sends uplink data to the network side device. Usually, the radio frequency unit 8001 includes but is not limited to an antenna, at least one amplifier, a transceiver, a coupler, a low noise amplifier, a duplexer, and the like.

The memory 8009 may be configured to store a software program or instructions as well as various data. The memory 8009 may mainly include a program or instruction storage area and a data storage area. The program or instruction storage area may store an operating system, an application or instructions required for at least one function (such as a sound play function and an image play function), and the like. In addition, the memory 8009 may include a high-speed random-access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM (EEPROM), or a flash memory, for example, at least one magnetic disk storage device, a flash memory device, or another volatile solid-state storage device.

The processor 8010 may include one or more processing units. Optionally, the processor 8010 may integrate an application processor and a modem processor. The application processor mainly processes an operating system, a user interface, an application or instructions, and the like. The modem processor, such as a baseband processor, mainly processes wireless communication. It can be understood that the foregoing modem processor may not be integrated into the processor 8010.

The radio frequency unit 8001 is configured to receive target information sent by the network side device, where the target information is used to indicate one or more frequency ranges for transmitting target data by the terminal; and transmit the target data within the frequency range.

Specifically, an embodiment of this application further provides a network side device. As shown in FIG. 9, the network side device 900 includes: an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; the radio frequency apparatus 92 processes the received information and then transmits the information by using the antenna 91.

The frequency band processing apparatus may be located in the baseband apparatus 93. The method performed by the network side device in the foregoing embodiment may be implemented by the baseband apparatus 93, and the baseband apparatus 93 includes a processor 94 and a memory 95.

The baseband apparatus 93 may include, for example, at least one baseband board, where a plurality of chips are disposed on the baseband board. As shown in FIG. 9, one of the chips is, for example, the processor 94, connected to the memory 95, to invoke a program in the memory 95 to perform the operations of the network side device shown in the foregoing method embodiment.

The baseband apparatus 93 may further include a network interface 96, configured to exchange information with the radio frequency apparatus 92, and the interface is, for example, a common public radio interface (common public radio interface, CPRI for short).

Specifically, the network side device in this embodiment of the present invention further includes instructions or a program stored in the memory 95 and executable on the processor 94. The processor 94 invokes the instructions or program in the memory 95 to perform the method performed by the modules shown in FIG. 6 and a same technical effect is achieved. To avoid repetition, details are not described herein again.

An embodiment of this application further provides a readable storage medium, storing a program or instruction. The program or instruction, when executed by a processor, implements all processes of the embodiments of the above data transmission method, and can achieve the same technical effects. To avoid repetition, details are not described herein again.

The processor is the processor in the above terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including: a processor and a communication interface, where the communication interface is coupled to the processor, and the processor is configured to run a network side device program or instruction, to implement all processes of the embodiments of the above data transmission method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It may be understood that the embodiments described in the present disclosure may be implemented by hardware, software, firmware, middleware, microcode, or a combination thereof. For hardware implementation, modules, units, submodules, subunits, and the like may be implemented in one or more application-specific integrated circuits (Application Specific Integrated Circuits, ASICs), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general purpose processor, a controller, a micro-controller, a microprocessor, and other electronic units configured to execute the functions described in this application, or a combination of the above.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the method and apparatus in the implementations of this application is not limited to perform functions in an order shown or discussed, and may further include performing the functions basically simultaneously or in a reverse order according to the involved functions. For example, the described method may be performed in an order different from the described order, and various steps may further be added, omitted, or combined. In addition, features described with reference to some examples may also be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the existing technology may be implemented in a form of a software product. The computer software product is stored in a storage medium (such as a read-only medium (ROM)/a random access memory (RAM), a magnetic disk or an optical disc) and includes several instructions for instructing a terminal (which may be a mobile phone, a computer, an air conditioner, a server, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A data transmission method, comprising:
receiving, by a terminal, target information sent by a network side device, wherein the target information is used to indicate one or more frequency ranges for transmitting target data by the terminal; and
transmitting, by the terminal, the target data within the frequency range.

2. The method according to claim 1, wherein the transmitting, by the terminal, the target data within the frequency range comprises:
selecting, by the terminal, a frequency range from the one or more frequency ranges, and transmitting the target data within the selected frequency range.

3. The method according to claim 2, wherein
corresponding frequency range selection information is configured for each of the frequency ranges, and the frequency range selection information comprises any one of the following: a numerical value range, a data type, a service access type, and access control information; and a correspondence between the frequency ranges and the frequency range selection information is determined in a manner configured by a network side or stipulated by a protocol.

4. The method according to claim 3, wherein the selecting, by the terminal, a frequency range from the one or more frequency ranges comprises at least one of the following:
determining, by the terminal, a first numerical value range, and selecting, from the one or more frequency ranges, a frequency range corresponding to the first numerical value range;
if a data type sent or received by the terminal is a first data type, selecting, from the one or more frequency ranges, a frequency range corresponding to the first data type; or
if a service access type sent or received by the terminal is a first service access type, selecting, from the one or more frequency ranges, a frequency range corresponding to the first service access type.

5. The method according to claim 3, wherein the selecting, by the terminal, a frequency range from the one or more frequency ranges comprises:
if access control information corresponding to a first frequency range indicates that a terminal without a specified data type or without a specified service access type is allowed to select the first frequency range as an operating frequency of the terminal, the terminal is allowed to select the first frequency range when no data type or no service access type is specified; or
if the access control information corresponding to the first frequency range indicates that a terminal without a specified data type or without a specified service access type is not allowed to select the first frequency range as the operating frequency of the terminal, the terminal cannot select the first frequency range; or
if the access control information corresponding to the first frequency range indicates that a terminal with a specified data type or with a specified service access type is allowed to select the first frequency range as the operating frequency of the terminal, a terminal with a specified data type or with a specified service access type is allowed to select the first frequency range when no data type or no service access type is specified; or
if the access control information corresponding to the first frequency range indicates that a terminal with a specified data type or with a specified service access type is not allowed to select the first frequency range as the operating frequency of the terminal, a terminal with a specified data type or with a specified service access type cannot select the first frequency range.

6. The method according to claim 2, wherein the selecting, by the terminal, a frequency range from the one or more frequency ranges comprises:
calculating, by the terminal by using a preset calculation rule, a numerical value corresponding to a first identifier, wherein the first identifier is an identifier of the terminal, and the calculation rule is dividing the numerical value by a quantity of the frequency ranges;
determining, by the terminal, a second identifier of a frequency range corresponding to a calculation result, wherein the calculation result is a remainder obtained by dividing the numerical value by the quantity of the frequency ranges; and
selecting, by the terminal from the one or more frequency ranges, a frequency range corresponding to the second identifier.

7. The method according to claim 2, wherein the selecting, by the terminal, a frequency range from the one or more frequency ranges comprises:
determining, by the terminal, a measured value of a first parameter in the one or more frequency ranges, and when the measured value of the first parameter is greater than or equal to a threshold, selecting, by the terminal from the one or more frequency ranges, a frequency range corresponding to the first parameter; and
determining, by the terminal, a measured value of a second parameter in the one or more frequency ranges, and when the measured value of the first parameter is less than or equal to the threshold, selecting, by the terminal from the one or more frequency ranges, a frequency range corresponding to the second parameter, wherein
the first parameter and the second parameter are different parameters.

8. The method according to claim 3, wherein the data type comprises at least one of the following:
a data bearer type, a data bearer identifier, a data flow identifier, a data session identifier, a cell group identifier corresponding to data, a data capacity, and a priority of a logical channel corresponding to the data.

9. The method according to claim 3, wherein the service access type comprises at least one of the following: an access category and an access identity.

10. The method according to claim 1, wherein the method further comprises:
after the terminal transmits the target data in the frequency range, changing, by the terminal, a current frequency range.

11. The method according to claim 1, wherein the method further comprises:
determining, by the terminal in a manner configured by a network side or stipulated by a protocol, a frequency priority corresponding to each frequency range; and
determining, by the terminal, a priority of cell selection or reselection based on the frequency priority corresponding to each frequency range, wherein different cells have different frequency ranges.

12. A data transmission method, comprising:
configuring, by a network side device, target information, wherein the target information is used to indicate one or more frequency ranges for transmitting target data by a terminal; and
sending, by the network side device, the target information to the terminal.

13. The method according to claim 12, wherein the target information comprises at least one of the following:
an identifier of the frequency range, frequency channel number information of the frequency range, bandwidth information of the frequency range, frequency start position of the frequency range, frequency end position of the frequency range, an identifier of a physical resource block of the frequency range, an identifier of a physical resource block quantity of the frequency range, and frequency offset information of the frequency range.

14. The method according to claim 12, wherein the sending, by the network side device, the target information to the terminal comprises:
indicating, by the network side device, the target information to the terminal through at least one of system information, a radio resource control RRC message, or downlink control information DCI.

15. The method according to claim 12, wherein the target information further comprises: frequency range selection information; and
the frequency range selection information comprises at least one of the following: a numerical value range, a data type, a service access type, and access control information.

16. A data transmission apparatus, comprising:
a receiving module, configured to receive target information sent by a network side device, wherein the target information is used to indicate one or more frequency ranges for transmitting target data by a terminal; and
a transmission module, configured to transmit the target data within the frequency range.

17. The apparatus according to claim 16, wherein the transmission module comprises:
a selection unit, configured to select a frequency range from the one or more frequency ranges; and
a transmission unit, configured to transmit the target data within the selected frequency range.

18. The apparatus according to claim 17, wherein
corresponding frequency range selection information is configured for each of the frequency ranges, and the frequency range selection information comprises any one of the following: a numerical value range, a data type, a service access type, and access control information; and a correspondence between the frequency ranges and the frequency range selection information is determined in a manner configured by a network side or stipulated by a protocol.

19. The apparatus according to claim 18, wherein the selection unit comprises:
a first selection subunit, configured to determine a first numerical value range, and select, from the one or more frequency ranges, a frequency range corresponding to the first numerical value range;
a second selection subunit, configured to: if a data type sent or received by the terminal is a first data type, select, from the one or more frequency ranges, a frequency range corresponding to the first data type; and
a third selection subunit, configured to: if a service access type sent or received by the terminal is a first service access type, select, from the one or more frequency ranges, a frequency range corresponding to the first service access type.

20. The apparatus according to claim 18, wherein the selection unit is further configured to perform at least one of the following manners:
if access control information corresponding to a first frequency range indicates that a terminal without a specified data type or without a specified service access type is allowed to select the first frequency range as an operating frequency of the terminal, allowing selection of the first frequency range when no data type or no service access type is specified; or
if the access control information corresponding to the first frequency range indicates that a terminal without a specified data type or without a specified service access type is not allowed to select the first frequency range as the operating frequency of the terminal, disallowing selection of the first frequency range; or
if the access control information corresponding to the first frequency range indicates that a terminal with a specified data type or with a specified service access type is allowed to select the first frequency range as the operating frequency of the terminal, allowing a terminal with a specified data type or with a specified service access type to select the first frequency range when no data type or no service access type is specified; or
if the access control information corresponding to the first frequency range indicates that a terminal with a specified data type or with a specified service access type is not allowed to select the first frequency range as the operating frequency of the terminal, disallowing a terminal with a specified data type or with a specified service access type to select the first frequency range.

21. The apparatus according to claim 18, wherein the selection unit comprises:
a calculation subunit, configured to calculate, by using a preset calculation rule, a numerical value corresponding to a first identifier, wherein the first identifier is an identifier of the terminal, and the calculation rule is dividing the numerical value by a quantity of the frequency ranges;
a determining subunit, configured to determine a second identifier of a frequency range corresponding to a calculation result, wherein the calculation result is a remainder obtained by dividing the numerical value by the quantity of the frequency ranges; and
a fourth selection subunit, configured to select, from the one or more frequency ranges, a frequency range corresponding to the second identifier.

22. The apparatus according to claim 18, wherein the selection subunit comprises:
a fifth selection subunit, configured to: determine a measured value of a first parameter in the one or more frequency ranges, and when the measured value of the first parameter is greater than or equal to a threshold, select, from the one or more frequency ranges, a frequency range corresponding to the first parameter; and
a sixth selection subunit, configured to: determine a measured value of a second parameter in the one or more frequency ranges, and when the measured value of the first parameter is less than or equal to the threshold, select, from the one or more frequency ranges, a frequency range corresponding to the second parameter, wherein
the first parameter and the second parameter are different parameters.

23. The apparatus according to claim 18, wherein the data type comprises at least one of the following:
a data bearer type, a data bearer identifier, a data flow identifier, a data session identifier, a cell group identifier corresponding to data, a data capacity, and a priority of a logical channel corresponding to the data.

24. The apparatus according to claim 18, wherein the service access type comprises at least one of the following: an access category and an access identity.

25. The apparatus according to claim 16, wherein the apparatus further comprises:
a change module, configured to: after the terminal transmits the target data in the frequency range, change a current frequency range.

26. The apparatus according to claim 16, wherein the apparatus further comprises:
a first determining module, configured to determine, in a manner configured by a network side or stipulated by a protocol, a frequency priority corresponding to each frequency range; and
a second determining module, configured to determine a priority of cell selection or reselection based on the frequency priority corresponding to each frequency range, wherein different cells have different frequency ranges.

27. A data transmission apparatus, comprising:
a configuration module, configured to configure target information, wherein the target information is used to indicate one or more frequency ranges for transmitting target data by a terminal; and
a sending module, configured to send the target information to the terminal.

28. The apparatus according to claim 27, wherein the target information comprises at least one of the following:
an identifier of the frequency range, frequency channel number information of the frequency range, bandwidth information of the frequency range, frequency start position of the frequency range, frequency end position of the frequency range, an identifier of a physical resource block of the frequency range, an identifier of a physical resource block quantity of the frequency range, and frequency offset information of the frequency range.

29. The apparatus according to claim 28, wherein
the sending module is further configured to indicate the target information to the terminal through at least one of system information, a radio resource control RRC message, or downlink control information DCI.

30. The apparatus according to claim 27, wherein the target information further comprises: frequency range selection information; and
the frequency range selection information comprises at least one of the following: a numerical value range, a data type, a service access type, and access control information.

31. A terminal, comprising a processor, a memory, and a program or instructions stored in the memory and executable on the processor, wherein when the program or instructions are executed by the processor, the steps of the data transmission method according to any one of claims 1 to 11 are implemented.

32. A network side device, comprising a processor, a memory, and a program or instructions stored in the memory and executable on the processor, wherein when the program or instructions are executed by the processor, the steps of the data transmission method according to any one of claims 12 to 15 are implemented.

33. A readable storage medium, wherein the readable storage medium stores a program or instructions, and when the program or instructions are executed by a processor, the data transmission method according to any one of claims 1 to 11 or the data transmission method according to any one of claims 12 to 15 is implemented.

34. A chip, wherein the chip comprises a processor and a communication interface, the communication interface is coupled to the processor, and the processor is configured to run a program or instructions of a network side device, to implement the data transmission method according to any one of claims 1 to 11 or the data transmission method according to any one of claims 12 to 15.

35. A computer program product, wherein the computer program product is executed by at least one processor, to implement the data transmission method according to any one of claims 1 to 11 or the data transmission method according to any one of claims 12 to 15.

36. A terminal, wherein the terminal is configured to perform the data transmission method according to any one of claims 1 to 11.

37. A network side device, wherein the network side device is configured to perform the data transmission method according to any one of claims 12 to 15.
